# EUROPÄISCHE PATENTSCHRIFT

(11) **EP 3 102 890 B1**
(45) Veröffentlichungstag und Bekanntmachung des Hinweises auf die Patenterteilung: **25.09.2019**
(21) Anmeldenummer: 15702775.6
(22) Anmeldetag: 05.02.2015
(51) Int. Cl.: F24S 80/20, F24S 20/20, F24S 40/60

(54) **VERFAHREN ZUM BETRIEB EINES LINEAR KONZENTRIERENDEN SOLARKRAFTWERKS SOWIE LINEAR KONZENTRIERENDES SOLARKRAFTWERK**
METHOD FOR OPERATING A LINEAR CONCENTRATOR SOLAR POWER PLANT, AND LINEAR CONCENTRATOR SOLAR POWER PLANT
PROCÉDÉ D'EXPLOITATION D'UNE CENTRALE SOLAIRE À CONCENTRATION LINÉAIRE AINSI QUE CENTRALE SOLAIRE À CONCENTRATION LINÉAIRE

(30) Priorität: 06.02.2014 EP 14154178
(43) Veröffentlichungstag der Anmeldung: 14.12.2016
(73) Patentinhaber: BASF SE, 67056 Ludwigshafen am Rhein (DE)
(72) Erfinder: WORTMANN, Jürgen, 67117 Limburgerhof (DE); LUTZ, Michael, 67346 Speyer (DE); FEDERSEL, Katharina, 69123 Heidelberg (DE); SCHIERLE-ARNDT, Kerstin, 64673 Zwingenberg (DE); MAURER, Stephan, 67435 Neustadt (DE); LADENBERGER, Michael, 76848 Darstein (DE); OSTERMAYR, Markus, 67098 Bad Dürkheim (DE)
(74) Vertreter: BASF IP Association
(86) Internationale Anmeldenummer: PCT/EP2015/052382
(87) Internationale Veröffentlichungsnummer: WO 2015/118052

(56) Entgegenhaltungen:
- EP-A1- 2 653 801
- WO-A1-2013/034587
- US-A- 4 432 343
- US-A1- 2005 126 170
- US-A1- 2010 078 011
- US-A1- 2011 126 824
- US-A1- 2013 092 153

## Beschreibung

Die Erfindung betrifft ein Verfahren zum Betrieb eines linear konzentrierenden Solarkraftwerks, bei dem ein Wärmeträgermedium durch eine Rohrleitungsschleife mit mindestens einem Receiver strömt, wobei das Wärmeträgermedium eine Strömungsgeschwindigkeit aufweist, die so groß ist, dass keine unzulässigen Temperaturdifferenzen innerhalb der Rohrleitungsschleife auftreten. Dieses wird in der Regel dadurch erreicht, dass die Strömung in der Rohrleitungsschleife turbulent ist. Weiterhin betrifft die Erfindung ein linear konzentrierendes Solarkraftwerk mit mindestens einer Rohrleitungsschleife mit mindestens einem Receiver, in dem ein durch die Rohrleitungsschleife strömendes Wärmeträgermedium durch Einstrahlen von Energie erwärmt wird.

Linear konzentrierende Solarkraftwerke sind zum Beispiel Parabolrinnen-Solarkraftwerke oder Fresnel-Solarkraftwerke. Diese umfassen üblicherweise eine Vielzahl an Rohrleitungsschleifen, durch die ein Wärmeträgermedium strömt. Die Rohrleitungsschleifen sind mit Receivern ausgestattet, in denen die Strahlungsenergie der Sonne mittels Parabolspiegeln bei Parabolrinnen-Solarkraftwerken oder Fresnel-Spiegeln bei Fresnel-Solarkraftwerken gebündelt und auf die Rohrleitung gerichtet wird, so dass durch die solare Energie das Wärmeträgermedium innerhalb der Rohrleitungen erwärmt wird.

Wärmeträgermedien, die eingesetzt werden, weisen vorzugsweise eine hohe Siedetemperatur und einen geringen Dampfdruck auf, damit das Wärmeträgermedium auch bei den in einem Solarkraftwerk auftretenden Temperaturen nicht im Receiver verdampft. Geeignete Wärmeträgermedien sind zum Beispiel Salzschmelzen, beispielsweise sogenanntes Solarsalz, das ein Gemisch aus Natriumnitrat und Kaliumnitrat im Verhältnis von 60 : 40 ist. Dieses wird insbesondere eingesetzt, um höhere Betriebstemperaturen und damit einen höheren Wirkungsgrad im linear konzentrierenden Solarkraftwerk zu erzielen.

Neben dem Einsatz von Salzschmelzen werden derzeit in Solarkraftwerken als Wärmeträgermedium auch Biphenyl/Diphenylether-Gemische eingesetzt, die jedoch aufgrund einer Zersetzungstemperatur von ca. 400 °C in ihrer maximalen Betriebstemperatur begrenzt sind. Da mit sinkender Betriebstemperatur auch der Wirkungsgrad eines Solarkraftwerks sinkt, wird angestrebt, Wärmeträgermedien einzusetzen, die auch bei Temperaturen von mehr als 400 °C stabil betrieben werden können.

Im Unterschied zu einem Biphenyl/Diphenylether-Gemisch besteht bei Einsatz von Salzschmelzen jedoch der Nachteil, dass diese im Allgemeinen bei Temperaturen oberhalb Umgebungstemperatur erstarren können. So schmilzt zum Beispiel eine Natrium-/Kaliumnitrat-Mischung im Eutektikum, d.h. bei einem Mischungsverhältnis von 44 : 56 bei einer Temperatur von 218 °C. In langen Rohrleitungssystemen, wie diese in Solarkraftwerken auftreten, sind Salzschmelzen mit hohen Schmelzpunkten daher schwierig sicher zu betreiben. Das Einfrieren der Salzschmelze kann große wirtschaftliche Schäden verursachen, da sich ein Salz beim Aufschmelzen stark ausdehnt. Hierdurch können Armaturen und Rohrleitungen aufgedrückt und stark beschädigt werden.

Das Einfrieren von Salzschmelzen kann grundsätzlich außerhalb der Betriebszeiten des Solarkraftwerks auftreten, d.h. außerhalb der Strahlungszeiten der Sonne oder bei witterungsbedingtem Ausfall der Sonnenstrahlung. Beim Einfrieren kommt es zu einer Volumenkontraktion, die in Abhängigkeit von Rohrleitungssystem und Betriebszustand zu einem unterschiedlichen Erstarrungszustand führen kann. Es wird erwartet, dass die erstarrende Schmelze zu mehr oder minder größeren Einheiten in tieferen Bereich des Rohrleitungssystems zusammenläuft, während sich nicht mit Salz gefüllte Räume in oberen Bereichen des Systems ausbilden. Beim Wiederaufschmelzen kann durch gegebenenfalls große räumliche Entfernung zwischen den Aufschmelzstellen mit Volumenexpansion und den nicht mit Salz gefüllten Räumen kein ausreichender Volumenausgleich erfolgen, um auftretende Drücke abzubauen.

Da die Sonne nicht ununterbrochen scheint, ist es notwendig, das Solarkraftwerk auf zwei verschiedene Arten zu betreiben. Zum einen wird während des Tages üblicherweise Energie über die solare Strahlung aufgenommen, auf der anderen Seite wird während der Nacht oder bei dichter Abschattung zum Beispiel durch Wolken, bei geringer solarer Einstrahlung Wärmeenergie aus dem heißen Solarfeld abgestrahlt. Die technischen Einrichtungen eines Solarkraftwerks und ihr Betrieb sind für beide Betriebsarten und für einen stoßfreien Übergang zwischen beiden Betriebsarten auszulegen.

Die Aufnahme solarer Wärmestrahlung ist betriebsgemäß einem schwankenden Energiefluss ausgesetzt. Tageszeitlich schwankt die Sonneneinstrahlung von nahezu Null am Morgen und am Abend bis zu höchsten Werten in der Mittagszeit. Auch eine Abschattung durch Wolken kann zu einer verminderten Einstrahlung solarer Wärme führen. Gleichzeitig ist es erforderlich, dass das Wärmeträgermedium mit angenähert der Auslegungstemperatur des heißen Speicherbehälters in das Wärmespeichersystem abgegeben wird. Dies wird derzeit dadurch gewährleistet, dass der Durchfluss des Wärmeträgermediums durch die Rohrleitungsschleifen des Solarkraftwerks so eingestellt wird, dass eine spezifikationsgerechte, d.h. ausreichend hohe, Temperatur am Ende der Rohrleitungsschleife erreicht wird.

Die Drosselung des Durchflusses der Wärmeträgerflüssigkeit im Tagbetrieb bei geringer Wärmeeinstrahlung findet dadurch ihre Grenzen, dass Mindestströmungsgeschwindigkeiten in den Rohrleitungsschleifen des Solarfeldes nicht unterschritten werden dürfen. Die Strömung muss nämlich turbulent sein, damit die durchströmte Rohrleitung ausreichend gleichmäßig temperiert wird. Bei sehr langsamer Strömungsgeschwindigkeit und damit laminarer Strömung besteht die Möglichkeit, dass sich Schichten unterschiedlicher Temperatur im Rohrleitungssystem ausbilden. Bei zu starken Temperaturunterschieden in der Rohrleitung kann es zu einer unzulässigen Durchbiegung kommen, die zu einer Schädigung des durchströmten Receivers führen kann.

Aus diesem Grund ist eine Mindestströmungsgeschwindigkeit im Receiver erforderlich, die eine turbulente Strömung gewährleistet.

Zudem ist es im Nachtbetrieb erforderlich, entweder das Rohrleitungssystem zu entleeren oder alternativ zu durchströmen, um zu vermeiden, dass das Wärmeträgermedium in den Rohrleitungen erstarrt.

In WO 2010/138606 A2 ist ein Solarkraftwerk beschrieben, bei dem zum Erhalt einer maximalen elektrischen Leistung die Strömungsgeschwindigkeit eingestellt wird. Als geeignete Wärmeträgermedien sind u.a. Wasser, Ethylenglykol, Wasser-Alkohol-Gemische, Wasser-Ethylenglykol-Gemische und Thermalöle beschrieben. Diese haben jedoch den vorstehend genannten Nachteil, dass ein Betrieb bei sehr hohen Temperaturen nicht möglich ist. Des Weiteren tritt bei diesen Wärmeträgermedien auch das Problem nicht auf, das bei Salzschmelzen auftritt, dass sich nämlich bei geringen Geschwindigkeiten eine Schichtenströmung ausbilden kann, die zu einer Durchbiegung der Rohrleitung führen kann.

Ein weiteres linear konzentrierendes Solarkraftwerk ist in CN-A 101354191 beschrieben. Dieses weist Sektionen auf, die mit unterschiedlichen Temperaturen betrieben werden. Auch hier wird Wasser eingesetzt, wobei das Wasser bereits im Solarfeld verdampft wird. Aufgrund der Verwendung von Wasser lassen sich auch hier nicht die Wirkungsgrade erzielen, die in linear konzentrierenden Solarkraftwerken möglich sind, die mit Wärmeträgermedien arbeiten, die sehr viel höhere Betriebstemperaturen erlauben, beispielsweise Salzschmelzen.

Die US-A 2013/0199517 beschreibt ein Turmkraftwerk mit vertikal angeordneten Receivern, bei dem der Wärmeträger nach Durchströmen der Receiver über einen Bypass zu einer Mischeinheit vor den Receivern zurückgeführt werden kann, um in der Mischeinheit mit zugeführtem Wärmeträger vermischt und erneut durch die Receiver geführt zu werden. Anders als bei einem linear konzentrierenden Solarkraftwerk, bei dem die Receiver horizontal in Reihe geschaltet sind und über lange Rohrleitungsschleifen in Reihe geschaltet werden, ist die effektive Strecke, entlang der der Wärmeträger erwärmt werden kann, bei einem Turmkraftwerk sehr kurz, so dass hier eine starke Erwärmung des Wärmeträgers anders als in einem linear konzentrierenden Solarkraftwerk nicht möglich ist. Der unterschiedliche Aufbau der Receiver erfordert daher vollkommen unterschiedliche Anforderungen an die Peripherie und den Aufbau des gesamten Solarkraftwerks. Zudem kann in einem Turmkraftwerk die Problematik des Einfrierens relativ einfach umgangen werden, da aufgrund der vertikal verlaufenden Receiverrohre und der kurzen Rohrleitungsstrecken eine schnelle Entleerung möglich ist.

Aufgabe der vorliegenden Erfindung ist es daher, ein Verfahren zum Betrieb eines linear konzentrierenden Solarkraftwerks bereitzustellen, das einen sicheren Betrieb auch in Übergangszeiten am Morgen und am Abend erlaubt und bei dem zudem sichergestellt wird, dass das Wärmeträgermedium in den Rohrleitungen im Nachtbetrieb nicht einfriert.

Diese Aufgabe wird gelöst durch ein Verfahren zum Betrieb eines linear konzentrierenden Solarkraftwerks, bei dem ein Wärmeträgermedium durch eine Rohrleitungsschleife mit mindestens einem Receiver strömt, wobei das Wärmeträgermedium eine Strömungsgeschwindigkeit aufweist, die so groß ist, dass keine unzulässigen Temperaturdifferenzen innerhalb der Rohrleitungsschleife auftreten und wobei mindestens ein Teil des Wärmeträgermediums bei Austritt aus der Rohrleitungsschleife entnommen wird und zurück in die Rohrleitungsschleife geführt wird.

Dass innerhalb der Rohrleitungen keine unzulässigen Temperaturdifferenzen auftreten, wird zum Beispiel dadurch erreicht, dass die Strömung in der Rohrleitungsschleife turbulent ist. Die unzulässigen Temperaturdifferenzen können auch vermieden werden, wenn das Wärmeträgermedium gleichmäßig von allen Seiten aufgeheizt werden kann, zum Beispiel durch eine geeignete Platzierung der Spiegel.

Durch das Entnehmen mindestens eines Teils des Wärmeträgermediums bei Austritt aus der Rohrleitungsschleife und dem Zurückführen dieses Teils in die Rohrleitungsschleife wird auch bei geringer Wärmeeinstrahlung und damit verbundener geringerer Erwärmung des Wärmeträgermediums sichergestellt, dass immer eine ausreichend große Menge an Wärmeträgermedium durch das Rohrleitungssystem strömt, um eine turbulente Strömung zu gewährleisten. Auf diese Weise kann eine Schichtung des Wärmeträgermediums in der Rohrleitung und damit eine Schädigung der Rohrleitung vermieden werden. Zudem ist es möglich, auf diese Weise ausreichend hohe Temperaturen des Wärmeträgermediums zu erhalten. Auf der anderen Seite ist es auch möglich, einen ausreichenden Durchfluss im Nachtbetrieb zu erreichen, um zu vermeiden, dass das Wärmeträgermedium, insbesondere bei Verwendung einer Salzschmelze, in den Rohrleitungen erstarrt. Insbesondere kann hierdurch vermieden werden, dass eine zu große Menge vom heißen Tank in den kalten Tank umgepumpt wird, da jeweils nur ein Teil der Wärmeträgerflüssigkeit zu- bzw. abgeführt wird und der Rest im Kreis gefahren wird. Die Menge an zugeführtem Wärmeträgermedium bzw. abgeführtem Wärmeträgermedium muss lediglich sicherstellen, dass die Temperatur des Wärmeträgermediums in den Rohrleitungen so hoch bleibt, dass keine Erstarrung auftritt.

Die Temperatur, bei der sicher keine Erstarrung des Wärmeträgermediums auftritt, wird auch Erstarrungskontrolltemperatur des Solarfeldes genannt. Diese Erstarrungskontrolltemperatur liegt oberhalb der Erstarrungstemperatur des Wärmeträgermediums und wird unter Beachtung von Verfügbarkeitsanforderungen und der Isolationsgüte der Rohrleitungen des Solarfeldes festgelegt. Die Erstarrungskontrolltemperatur kann dabei weit unterhalb der Auslegungstemperatur des Behälters mit kaltem Wärmeträgermedium liegen. Wenn das Wärmeträgermedium aus dem Behälter für das kalte Wärmeträgermedium direkt in das Solarfeld eingeführt wird, wird zumindest in Teilen das Solarfeld nicht auf der niedrigen Erstarrungskontrolltemperatur, sondern auf der höheren Auslegungstemperatur des Behälters mit der kalten Wärmeträgerflüssigkeit betrieben. Da die Wärmeverluste des Solarfeldes stark mit zunehmenden Temperaturen steigen, hat dies zur Folge, dass mehr Wärme über Abstrahlung im Solarfeld verloren geht als bei einem vollständigen Betrieb des Solarfeldes bei der Erstarrungskontrolltemperatur. Durch das erfindungsgemäße Verfahren kann aufgrund der Kreislaufführung des Wärmeträgers in den Rohrleitungsschleifen die Temperatur deutlich näher an der Erstarrungskontrolltemperatur gehalten werden, so dass auf diese Weise die Wärmeverluste minimiert werden können.

Da durch das erfindungsgemäße Verfahren die Temperatur in den Rohrleitungsschleifen des Solarfeldes sowohl im Tagbetrieb als auch im Nachtbetrieb im Wesentlichen konstant gehalten werden kann, werden die Rohrleitungssysteme von schädlichen Wechselbeanspruchungen entlastet.

Gemäß der Erfindung wird der in die Rohrleitungsschleife zurückgeführte Teil des Wärmeträgermediums vor Einleitung in die Rohrleitungsschleife mit dem der Rohrleitungsschleife zuzuführenden Wärmeträgermedium gemischt. Hierdurch wird vermieden, dass zwei Ströme an Wärmeträgern mit unterschiedlichen Temperaturen in die Rohrleitungsschleife gelangen. Erfindungsgemäß wird ein Mischbehälter eingesetzt, in dem sowohl der zurückgeführte Teil des Wärmeträgermediums als auch neu zuzuführendes Wärmeträgermedium gemischt werden. In dem Mischbehälter werden der zurückgeführte Teil des Wärmeträgermediums und das zuzuführende Wärmeträgermedium eingeleitet. Aus dem Mischbehälter wird eine Mischung aus zurückgeführtem Wärmeträgermedium und zuzuführendem Wärmeträgermedium in die Rohrleitungsschleife eingespeist.

Gemäß der Erfindung ist der Behälter, in dem der zurückgeführte Teil des Wärmeträgermediums und das der Rohrleitungsschleife zuzuführende Wärmeträgermedium gemischt werden, ein Entleerungsbehälter, der mit einer in die Rohrleitungsschleife führenden Rohrleitung verbunden ist. Vorteil der Verwendung des Entleerungsbehälters ist, dass zusätzliche Anlagenkomponenten, beispielsweise Mischbehälter, eingespart werden können.

Um im Falle eines Energieausfalls, der eine Entleerung des Solarfeldes notwendig macht oder auch bei sonstigen Ereignissen, bei denen das Solarfeld entleert werden soll, ausreichend Entleerungsvolumen zur Verfügung zu haben, in das das Wärmeträgermedium beim Entleeren einströmen kann, ist es bevorzugt, wenn der Entleerungsbehälter im Betrieb des linear konzentrierenden Solarkraftwerks teilbefüllt ist und das nicht befüllte Volumen so bemessen ist, dass das in der Rohrleitungsschleife enthaltene Wärmeträgermedium in den Entleerungsbehälter ablaufen kann.

Da es, wie vorstehend beschrieben, bevorzugt ist, das Wärmeträgermedium im Nachtbetrieb mit möglichst niedriger Temperatur zu fahren, ist es notwendig, bei Umstellung auf Tagbetrieb das Wärmeträgermedium auf eine Mindestbetriebstemperatur zu erwärmen. Um eine möglichst schnelle Erwärmung des Wärmeträgermediums zu erhalten, ist es zum Beispiel möglich, bei der Umschaltung von Nachtbetrieb auf Tagbetrieb das gesamte am Austritt der Rohrleitungsschleife entnommene Wärmeträgermedium so lange zurück in die Rohrleitungsschleife zu leiten, bis das Wärmeträgermedium auf die Mindestbetriebstemperatur erwärmt worden ist. Hierdurch wird vermieden, dass durch Zumischung von frischem Wärmeträgermedium mit einer niedrigeren Temperatur die Temperatur des der Rohrleitungsschleife zugeführten Wärmeträgermediums wieder abgesenkt wird. Dies erlaubt eine schnellere Aufheizung des durch die Rohrleitungsschleifen geführten Wärmeträgermediums auf die Mindestbetriebstemperatur. Sobald die Mindestbetriebstemperatur erreicht ist, kann dann wieder kälteres Wärmeträgermedium zugeführt werden, das aufgeheizt werden kann. Das so erwärmte Wärmeträgermedium, das dann nicht entnommen und zurückgeführt wird, wird aus der Rohrleitungsschleife in einen Behälter für heißes Wärmeträgermedium eingeleitet. Um die Energie des Wärmeträgermediums zu nutzen, wird dann das Wärmeträgermedium aus dem Behälter für heißes Wärmeträgermedium entnommen, kann zum Beispiel in einem Wärmetauscher an einen Dampfkreislauf Wärme abgeben, in dem Wasser zunächst verdampft und der Dampf dann überhitzt wird. Das Wärmeträgermedium wird dann aus dem Wärmetauscher zurück in den Behälter für das kalte Wärmeträgermedium eingeleitet. Der Dampf kann beispielsweise genutzt werden, um über Turbinen Generatoren zur Stromerzeugung anzutreiben. Das Wärmeträgermedium aus dem Behälter für kaltes Wärmeträgermedium wird dann wieder durch die Rohrleitungsschleifen geleitet, in denen es durch Energieaufnahme durch Sonneneinstrahlung erwärmt wird.

Sobald die Wärmeeinstrahlung durch die Sonne so weit abgenommen hat, dass auf Nachtbetrieb umgeschaltet werden muss, wird das Wärmeträgermedium in der Rohrleitungsschleife wieder im Kreis geführt, bis die Erstarrungskontrolltemperatur erreicht ist. Bevorzugt ist es, dass dann im Nachtbetrieb der zurückgeführte Teil des Wärmeträgermediums so bemessen ist, dass die der Rohrleitungsschleife zugeführte Mischung aus zurückgeführtem Wärmeträgermedium und zuzuführendem Wärmeträgermedium eine Temperatur aufweist, die maximal 20% des Temperaturwertes in °C oberhalb der Erstarrungstemperatur liegt. Ein geeigneter Wert, den die Temperatur des Wärmeträgermediums oberhalb der Erstarrungstemperatur liegt, ist beispielsweise 30°C. Hierdurch wird zum einen die Temperatur des Wärmeträgermediums, das im Nachtbetrieb durch die Rohrleitungsschleifen geführt wird, so niedrig wie möglich gehalten, zum anderen wird vermieden, dass die Temperatur innerhalb der Rohrleitungsschleife durch Wärmeabgabe auf eine Temperatur unterhalb der Erstarrungstemperatur sinkt. Hierdurch wird sichergestellt, dass auch im Nachtbetrieb kein Wärmeträgermedium innerhalb der Rohrleitungsschleifen erstarrt.

Die Temperatur, die das Wärmeträgermedium minimal aufweist, um ein Einfrieren der Rohrleitungen zu verhindern ist dabei auch abhängig von der Geschwindigkeit, mit der das Wärmeträgermedium durch die Rohrleitungen geleitet wird und der Qualität der Isolierung der Rohrleitungen und der Receiver. Dabei erlaubt eine höhere Geschwindigkeit einen geringeren Abstand zur Erstarrungstemperatur.

Als Wärmeträgermedium wird eine Salzschmelze eingesetzt. Geeignete Salzschmelzen sind zum Beispiel Nitratsalze und Nitritsalze der Alkalimetalle, beispielsweise Kaliumnitrat, Natriumnitrat, Kaliumnitrit oder Natriumnitrit sowie Mischungen aus diesen Salzen. Ein üblicherweise eingesetztes Salz als Wärmeträgermedium ist eine Mischung aus Kaliumnitrat und Natriumnitrat, beispielsweise das sogenannte Solarsalz, eine Mischung aus 40 Gew.-% Kaliumnitrat und 60 Gew.-% Natriumnitrat.

Ein zur Durchführung des erfindungsgemäßen Verfahrens geeignetes linear konzentrierendes Solarkraftwerk weist mindestens eine Rohrleitungsschleife mit mindestens einem Receiver auf, in dem ein durch die Rohrleitungsschleife strömendes Wärmeträgermedium durch einstrahlende Sonnenenergie erwärmt wird. Zusätzlich ist eine Mischvorrichtung umfasst, in der mindestens ein Teil des durch die Rohrleitungsschleife strömenden Wärmeträgermediums mit zuzuführendem Wärmeträgermedium gemischt wird.

Die Mischvorrichtung ist ein Behälter, der mit einer in die Rohrleitungsschleife führenden Rohrleitung verbunden ist. Um das bereits durch die Rohrleitungsschleife geströmte Wärmeträgermedium und neu in die Rohrleitungsschleife einströmendes Wärmeträgermedium in dem Behälter zu mischen, werden sowohl das in die Rohrleitungsschleife einzuleitende Wärmeträgermedium als auch das zurückgeführte Wärmeträgermedium in den Mischbehälter geführt und dort miteinander vermischt. Das Vermischen kann dabei zum Beispiel durch eine geeignete Einleitung erfolgen. Alternativ ist es auch möglich, eine beliebige Mischeinrichtung im Behälter vorzusehen, beispielsweise ein Rührer. Der Rührer kann dabei jede beliebige, dem Fachmann bekannte Form annehmen. Auch ist es möglich, einen statischen Mischer einzusetzen.

Alternativ zu einer Mischvorrichtung, die jeder einzelnen Rohrleitungsschleife zugeordnet ist, ist es auch möglich, wenn das Solarkraftwerk eine Vielzahl von Rohrleitungsschleifen umfasst, eine zentrale Mischvorrichtung vorzusehen, in die das zurückzuführende Wärmeträgermedium aus den einzelnen Rohrleitungsschleifen und das in die Rohrleitungsschleifen zuzuführende Wärmeträgermedium eingeleitet werden und aus der die Mischung aus zurückgeführtem Wärmeträgermedium und zuzuführendem Wärmeträgermedium in die Rohrleitungsschleifen eingespeist wird. Mit der zentralen Mischvorrichtung kann, wie vorstehend bereits dargelegt, auf eine Vielzahl von Flanschen und Verbindungen verzichtet werden. Zudem werden hierdurch gleiche Bedingungen geschaffen, da allen Rohrleitungsschleifen das Wärmeträgermedium mit gleicher Temperatur zugeführt wird. Weiterhin ist es auch möglich, mehrere Rohrleitungsschleifen zu einem Solarfeldsegment zusammenzufassen und das Solarfeldsegment mit einer zentralen Mischvorrichtung. In diesem Fall werden dann mehrere Solarfeldsegmente zu einem Solarfeld zusammengefasst.

Die zentrale Mischvorrichtung kann zum Beispiel ein mit einer Trennwand abgeteilter Teil eines Behälters sein. Der Behälter kann dabei ein beliebiger Behälter, der sich in dem linear konzentrierenden Solarkraftwerk befindet, sein, beispielsweise ein Entleerungsbehälter.

Wie bei den Mischvorrichtungen, die jeweils einer Rohrleitungsschleife zugeordnet sind, ist es auch bei der zentralen Mischvorrichtung möglich, eine zusätzliche Mischeinrichtung, beispielsweise einen Rührer, vorzusehen. Alternativ kann auch hier ein statischer Mischer eingesetzt werden.

Es ist notwendig, den Behälter an der tiefsten Stelle des Gesamtrohrleitungssystems vorzusehen, damit das Wärmeträgermedium allein aufgrund des Schwerkrafteinflusses in den Entleerungsbehälter einströmen kann. Zur Entnahme ist es dann vorteilhaft, ein Tauchrohr vorzusehen, mit dem das Wärmeträgermedium aus dem Behälter oder dem abgetrennten Teil des Behälters entnommen wird. Durch die Verwendung des Tauchrohres kann sichergestellt werden, dass das gesamte Wärmeträgermedium aus dem Behälter entnommen werden kann. Das Tauchrohr ist dabei mit einer Tauchpumpe versehen, mit der das Wärmeträgermedium aus dem Behälter gesaugt und in die Rohrleitungsschleifen eingespeist werden kann. Wenn der Behälter als Entleerungsbehälter dient, kann über das Tauchrohr auch nach einer Gesamtentleerung des Rohrleitungssystems das Wärmeträgermedium wieder in das Rohrleitungssystem zurück eingeleitet werden.

Ausführungsbeispiele der Erfindung sind in den Figuren dargestellt und werden in der nachfolgenden Beschreibung näher erläutert.

Es zeigen:
- Figur 1: eine schematische Darstellung eines linear konzentrierenden Solarkraftwerks,
- Figur 2: eine schematische Darstellung eines segmentierten Solarfeldes, das an einen zentralen Speicher gekoppelt ist,
- Figur 3: eine schematische Darstellung eines segmentierten Solarfeldes, das an einen zentralen Speicher mit einem zwischengeschalteten Mischer gekoppelt ist,
- Figur 4: eine schematische Darstellung eines segmentierten Solarfeldes, das an einen zentralen Speicher mit zwischengeschalteten Mischern gekoppelt ist,
- Figur 5: eine schematische Darstellung einer Mischvorrichtung mit Pumpe, wobei die Mischvorrichtung nicht gemäß der Erfindung ausgeführt ist,
- Figur 6: eine als Mischbehälter mit einer Tauchpumpe ausgeführte Mischvorrichtung,
- Figur 7: eine schematische Darstellung eines linear konzentrierenden Solarkraftwerks mit Entleerungssegmenten, wobei den Segmenten jeweils Entleerungsbehälter und Mischer zugeordnet sind.

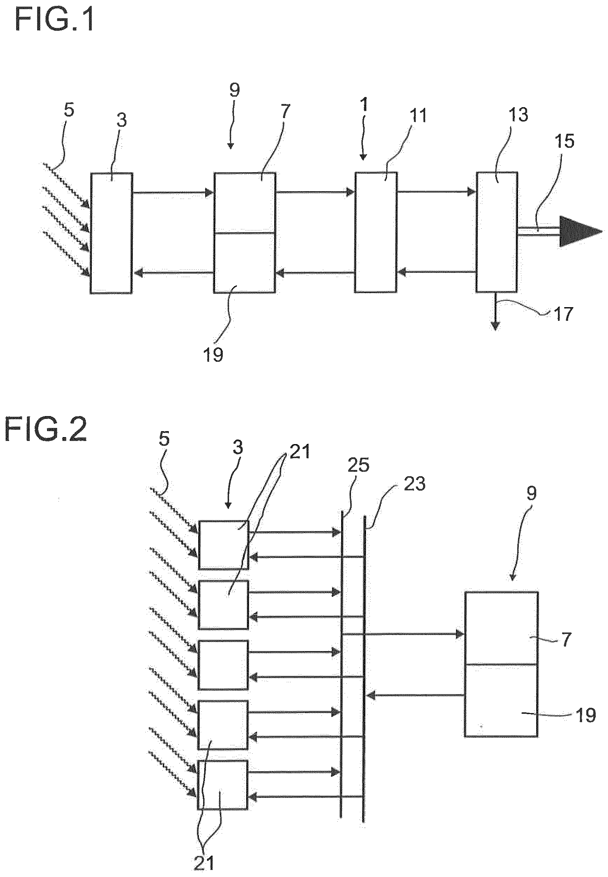

In Figur 1 ist ein linear konzentrierendes Solarkraftwerk schematisch dargestellt.

Ein linear konzentrierendes Solarkraftwerk 1 umfasst ein Solarfeld 3, in dem ein Wärmeträgermedium durch einfallende Sonnenstrahlung 5 aufgeheizt wird. Hierzu umfasst das Solarfeld 3 üblicherweise mehrere in Reihe geschaltete Receiver, durch die das Wärmeträgermedium hindurchgeleitet wird. Die Receiver umfassen dabei jeweils Spiegel, in denen die einfallende Sonnenstrahlung 5 gebündelt und auf das Wärmeträgermedium gelenkt wird. Die Spiegel können dabei zum Beispiel in Form von Paralbolrinnen oder auch als Fresnel-Spiegel ausgebildet sein.

Aus dem Solarfeld 3 fließt das Wärmeträgermedium üblicherweise zunächst in einen heißen Tank 7 eines Wärmespeichersystems 9. Aus dem heißen Tank 7 strömt das Wärmeträgermedium in einen Wärmeübertrager 11, in dem das Wärmeträgermedium an einen Wasserkreislauf Wärme abgibt. Hierdurch wird das Wasser des Wasserkreislaufs verdampft und überhitzt. Der überhitzte Dampf treibt eine Turbine 13 an, die einen Generator zur Erzeugung von elektrischer Energie antreibt. Die Stromerzeugung erfolgt dabei wie in einem konventionellen Kraftwerk. Die Erzeugung elektrischer Energie ist dabei mit einem Pfeil 15 dargestellt.

Durch das Antreiben der Turbine 13 verliert der Dampf Energie. Diese wird in Form von Wärme 17 abgegeben. Hierbei kann ein Teil des Dampfes kondensieren. Der abgekühlte Dampf strömt zurück in den Wärmeübertrager 11, in dem dieser erneut Wärme vom Wärmeträgermedium aufnimmt und verdampft und überhitzt wird. Der üblicherweise in einem Kraftwerk eingesetzte Dampfkondensator ist hier zur Vereinfachung nicht dargestellt. Das hierdurch abgekühlte Wärmeträgermedium strömt in einen kalten Tank 19 des Wärmespeichersystems. Aus dem kalten Tank 19 strömt das Wärmeträgermedium in das Solarfeld 3, in dem dieses erneut erwärmt wird. Die Verwendung des Wärmespeichersystems 9 mit heißem Tank 7 und kaltem Tank 19 hat den Vorteil, dass eine so große Menge an Wärmeträgermedium erwärmt und zwischengespeichert werden kann, dass auch zu Zeiten, in denen keine Sonne scheint und somit keine Erwärmung des Wärmeträgermediums erfolgen kann, Wärme an den Dampfkreislauf zur Energieerzeugung abgegeben werden kann.

Das Wärmespeichersystem 9 kann dabei, wie schematisch in Figur 1 dargestellt, einen heißen Tank 7 und eine kalten Tank 19 umfassen. Alternativ ist es auch möglich, als Wärmespeichersystem 9 einen Schichtenspeicher zu verwenden, in dem sich im unteren Bereich das kalte Wärmeträgermedium und im oberen Bereich das heiße Wärmeträgermedium befinden. Hierbei wird aus dem oberen Bereich das heiße Wärmeträgermedium entnommen und dem Dampfkreislauf zugeführt und aus dem unteren Bereich das kalte Wärmeträgermedium, das in das Solarfeld 3 eingespeist wird.

In Figur 2 ist schematisch ein segmentiertes Solarfeld dargestellt, das an einen zentralen Speicher gekoppelt ist.

Figur 2 zeigt einen Ausschnitt eines linear konzentrierenden Solarkraftwerks 1, bei dem das Solarfeld 3 in einzelne Solarfeldsegmente 21 geteilt ist. Um die einzelnen Solarfeldsegmente 21 zu speisen, wird das Wärmeträgermedium aus dem kalten Tank 19 in einen Verteiler 23 eingeleitet. Aus dem Verteiler 23 strömt das Wärmeträgermedium in die einzelnen Solarfeldsegmente 21. Jedes einzelne Solarfeldsegment 21 umfasst dabei eine oder mehrere Rohrleitungsschleifen, die mit Receivern versehen sind, von denen die einfallende Sonnenstrahlung 5 eingefangen und an das Wärmeträgermedium gebündelt abgegeben wird, um so das Wärmeträgermedium zu erwärmen. Aus den einzelnen Solarfeldsegmenten 21 strömt das erwärmte Wärmeträgermedium in einen Sammler 25. Der Sammler 25 ist mit dem heißen Tank 7 des Wärmespeichersystems 9 verbunden, so dass das aufgeheizte Wärmeträgermedium aus dem Sammler 25 in den heißen Tank 7 strömen kann.

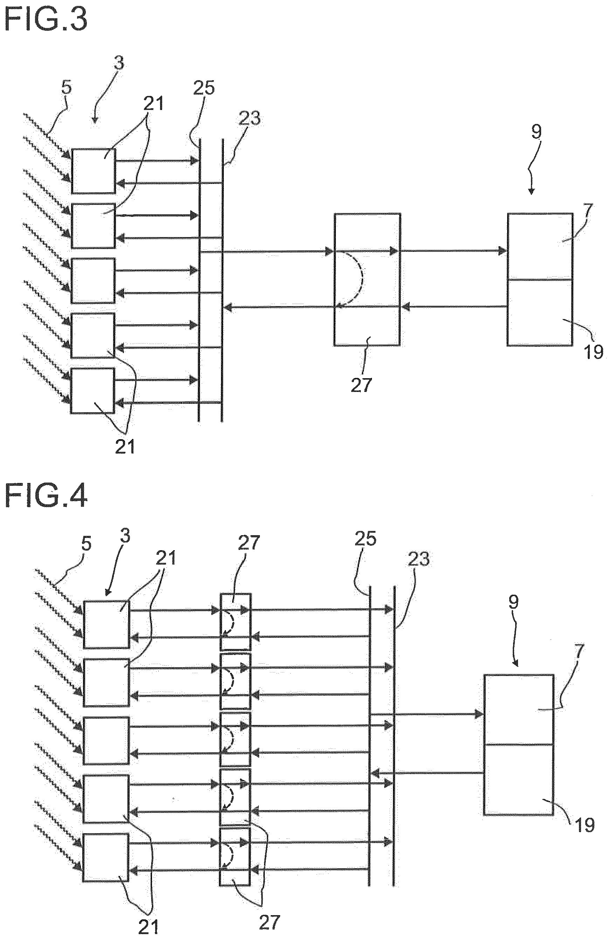

In Figur 3 ist ein segmentiertes Solarfeld dargestellt, das an einen zentralen Speicher mit einem zwischengeschalteten Mischer gekoppelt ist.

Der Aufbau des linear konzentrierenden Solarkraftwerks 1, wie es in Figur 3 dargestellt ist, entspricht im Wesentlichen dem in Figur 2 dargestellten. Im Unterschied zu der in Figur 2 dargestellten Ausführungsform weist das in Figur 3 dargestellte Solarkraftwerk eine Mischvorrichtung 27 auf, die zwischen dem Wärmespeichersystem 9 und dem Verteiler 23 bzw. Sammler 25 angeordnet ist. Durch die Mischvorrichtung 27 besteht die Möglichkeit, einen Teil des Wärmeträgermediums aus dem Sammler 25 wieder dem Verteiler 23 zuzuführen, um auf diese Weise zum Beispiel beim Starten des linear konzentrierenden Solarkraftwerks, wenn vom Nachtbetrieb auf Tagbetrieb umgeschaltet wird und die Sonne wieder beginnt zu scheinen, das Wärmeträgermedium stärker zu erwärmen. Hierbei wird ein Teil des Wärmeträgermediums zurück in das Solarfeld 3 geleitet, um dieses weiter zu erwärmen. Hierbei besteht auch die Möglichkeit, das gesamte Wärmeträgermedium aus dem Sammler 25 in der Mischvorrichtung 27 umzuleiten und erneut dem Verteiler 23 zuzuführen. Hierdurch kann das Wärmeträgermedium so weit aufgeheizt werden, dass eine vorgegebene Mindesttemperatur erreicht wird. Wenn die Mindesttemperatur erreicht ist, kann ein Teil des Wärmeträgermediums in den heißen Tank 7 geleitet werden und entsprechend ein Teil aus dem kalten Tank 19 entnommen und der Mischvorrichtung 27 zugeführt werden. In der Mischvorrichtung 27 kann das kalte Wärmeträgermedium mit einem Teil des erwärmten Wärmeträgermediums vermischt werden. Hierdurch kann die Menge an Wärmeträgermedium, die durch die einzelnen Solarfeldsegmente 21 des Solarfeldes 3 geleitet wird, so groß gehalten werden, dass eine turbulente Strömung realisiert werden kann. Hierdurch wird eine Schichtung des Wärmeträgermediums in den Rohrleitungen vermieden, die zu einer Schädigung der Rohrleitungen führen kann.

Das Einmischen von bereits erwärmtem Wärmeträgermedium in das kalte Wärmeträgermedium in der Mischvorrichtung 27 ist insbesondere dann sinnvoll, wenn die einfallende Sonnenstrahlung 5 nicht ausreichend ist, das gesamte die Solarfeldsegmente 21 durchströmende Volumen des Wärmeträgermediums so weit zu erwärmen, dass dieses vollständig entnommen und dem heißen Tank 7 zugeführt werden kann.

Eine alternative Anordnung von Mischvorrichtungen ist in Figur 4 dargestellt. Im Unterschied zu der in Figur 3 dargestellten Ausführungsform ist bei der in Figur 4 dargestellten Ausführungsform jedem einzelnen Solarfeldsegment 21 eine Mischvorrichtung 27 zugeordnet. Die Mischvorrichtungen 27 befinden sich dabei zwischen Sammler 25 bzw. Verteiler 23 und den einzelnen Solarfeldsegmenten 21. Durch die Zuordnung von Mischvorrichtungen 27 zu jedem einzelnen Solarfeldsegment 21 besteht die Möglichkeit, die Solarfeldsegmente 21 unabhängig voneinander zu regeln, so dass bei unterschiedlicher Wärmeeinstrahlung oder unterschiedlicher Erwärmung des Wärmeträgermediums jeweils individuell die Menge an erhitztem Wärmeträgermedium, die in der Mischvorrichtung 27 dem kalten Wärmeträgermedium zugeführt wird, eingestellt werden kann.

Weiterhin ist es auch möglich, jeder Rohrleitungsschleife eines Solarfeldsegments 21 eine separate Mischvorrichtung 27 zuzuordnen.

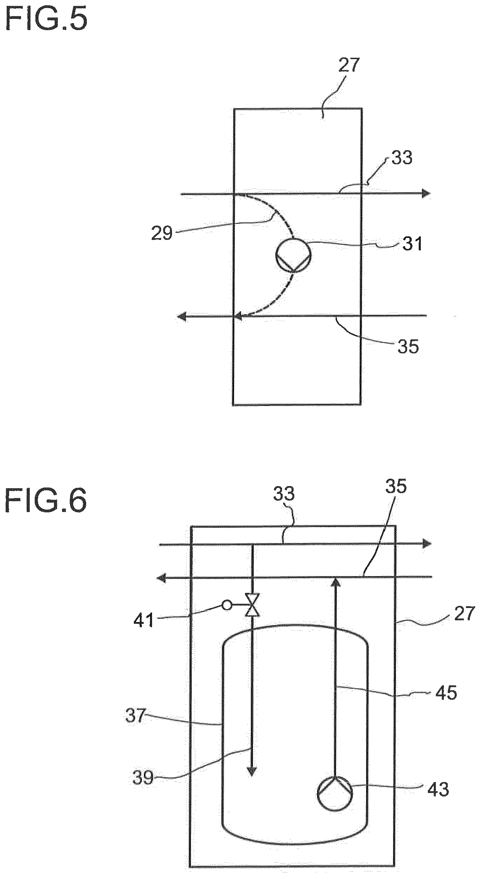

Eine Ausführungsform einer Mischvorrichtung mit Pumpe ist schematisch in Figur 5 dargestellt.

Bei der in Figur 5 dargestellten Mischvorrichtung 27 wird die Durchmischung durch einen Bypass 29 realisiert, durch den erhitztes Wärmeträgermedium aus der ein Solarfeldsegment verlassenden Rohrleitung in eine in das Solarfeldsegment 21 einmündende, das kalte Wärmeträgermedium führende Rohrleitung eingeleitet werden kann. Um die Menge an Wärmeträgermedium, die durch den Bypass 29 geleitet wird, einstellen zu können, ist in der in Figur 5 dargestellten Ausführungsform im Bypass 29 eine Pumpe 31 aufgenommen. Mit der Pumpe 31 lässt sich das Wärmeträgermedium aus der das heiße Wärmeträgermedium führenden Rohrleitung 33 in die das kalte Wärmeträgermedium führende Rohrleitung 35 transportieren.

Insbesondere dann, wenn das gesamte Wärmeträgermedium von der das heiße Wärmeträgermedium führenden Rohrleitung 33 in die das kalte Wärmeträgermedium führende Rohrleitung 35 umgepumpt werden soll, zum Beispiel bei der Umstellung von Nachtbetrieb auf Tagbetrieb, wird durch die Pumpe 31 eine Förderung des Wärmeträgermediums realisiert.

Neben dem in Figur 5 dargestellten Bypass 29 kann die Mischvorrichtung zum Beispiel auch durch einen Behälter realisiert werden. Dies ist beispielhaft in Figur 6 dargestellt.

Die in Figur 6 dargestellte Ausführungsform der Mischvorrichtung 27 umfasst einen Behälter 37, in den eine aus der das heiße Wärmeträgermedium führenden Rohrleitung 33 abzweigende Rohrleitung 39 mündet. In der Rohrleitung 39 ist eine Absperreinrichtung 41 aufgenommen, mit der eine Unterschreitung eines Minimalfüllstandes und ein Überschreiten eines Maximalfüllstandes im Behälter 37 verhindert werden kann. So ist es zum Beispiel notwendig, die Absperreinrichtung 41 zu öffnen, wenn der Füllstand im Behälter sich dem Minimalfüllstand nähert, und auf der anderen Seite kann die Absperreinrichtung 41 verschlossen werden, wenn der Maximalfüllstand erreicht ist, um zu vermeiden, dass weiteres Wärmeträgermedium in den Behälter 37 einströmen kann.

Aus dem Behälter 37 wird das Wärmeträgermedium in der in Figur 6 dargestellten Ausführungsform mit Hilfe einer Tauchpumpe 43 entnommen. Die Tauchpumpe 43 ist dabei mit einer Rohrleitung 45 verbunden, die in der das kalte Wärmeträgermedium führenden Rohrleitung 35 mündet. Um zu vermeiden, dass die Tauchpumpe 43 trockenläuft, muss im Behälter 37 immer eine Mindestfüllmenge enthalten sein.

Durch die Verwendung des Behälters 37 ist es möglich, das Auftreten von Druckverlusten beim Durchströmen einer Mischvorrichtung, wie sie beispielsweise in Figur 5 dargestellt ist, zu vermeiden. Durch die entsprechenden Druckverluste entstehen zusätzlich merkbare Energieverluste, die unerwünscht sind.

Der Behälter 37, wie er in Figur 6 dargestellt ist, dient erfindungsgemäß neben seiner Funktion als Mischvorrichtung zusätzlich auch als Entleerungsbehälter, in den das Wärmeträgermedium einströmt, wenn es beispielsweise erforderlich ist, ein einzelnes Solarfeldsegment 21, dem die Mischvorrichtung 27 zugeordnet ist, zu entleeren. Wenn eine zentrale Mischvorrichtung 27 vorgesehen ist, ist der Entleerungsbehälter so groß auszulegen, dass das Wärmeträgermedium aus sämtlichen Solarfeldsegmenten 21 im Behälter 37 Platz findet.

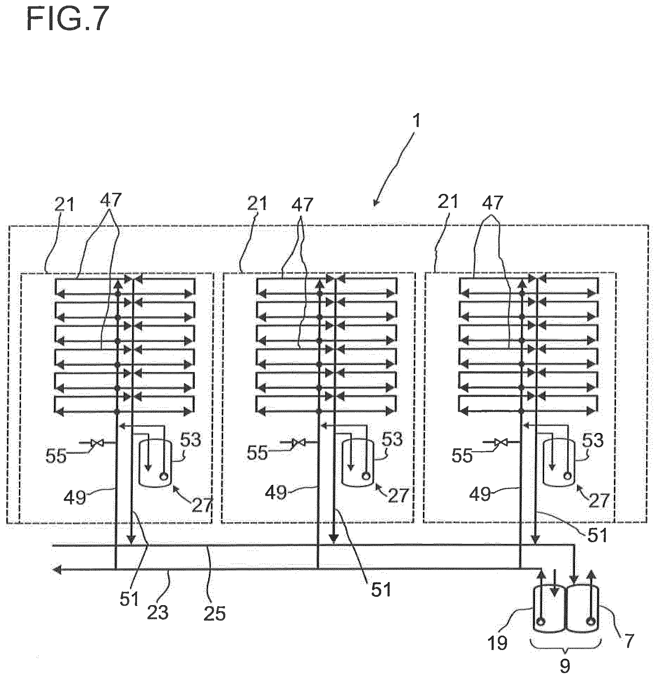

Ein linear konzentrierendes Solarkraftwerk mit mehreren Solarfeldsegmenten, denen jeweils ein Entleerungsbehälter zugeordnet ist, ist in Figur 7 dargestellt.

Das in Figur 7 dargestellte linear konzentrierende Solarkraftwerk 1 umfasst mehrere Solarfeldsegmente 21, die jeweils mehrere Rohrleitungsschleifen 47 aufweisen. In den einzelnen Rohrleitungsschleifen 47 sind die Kollektoren angeordnet, in denen das Wärmeträgermedium durch die einfallende Sonnenstrahlung erwärmt wird. Die Rohrleitungsschleifen 47 sind jeweils an Unterverteiler 49 und Untersammler 51 angeschlossen, wobei über die Unterverteiler 49 das Wärmeträgermedium in die Rohrleitungsschleifen 47 eingeleitet wird und das durch die Rohrleitungsschleifen 47 geströmte Wärmeträgermedium in den Untersammlern 51 zusammenströmt. Die Unterverteiler 49 sind dabei mit dem Verteiler 23 verbunden und die Untersammler 51 mit dem Sammler 25. Der Verteiler 23 ist dabei mit dem kalten Tank 19 und der Sammler 25 mit dem heißen Tank 7 des Wärmespeichersystems 9 verbunden. Um das kalte Wärmeträgermedium aus dem kalten Tank 19 zu entnehmen, ist in der hier dargestellten Ausführungsform im kalten Tank 19 eine Tauchpumpe vorgesehen. Entsprechend wird auch aus dem heißen Tank 7 das Wärmeträgermedium mit einer Tauchpumpe entnommen, wobei das heiße Wärmeträgermedium aus dem heißen Tank 7 dem Wärmeübertrager 11 zugeführt wird.

In der in Figur 7 dargestellten Ausführungsform ist jedem Solarfeldsegment 21 ein Entleerungsbehälter 53 zugeordnet. Der Aufbau der Entleerungsbehälter 53 entspricht dabei dem in Figur 6 dargestellten Aufbau der Behälter 27.

Wenn es notwendig ist, ein Solarfeldsegment 21 zu entleeren, wird ein Belüftungsventil 55 geöffnet. Das Wärmeträgermedium strömt dann über den Unterverteiler 49 durch die Rohrleitungsschleifen 47 in den Untersammler 51 und aus dem Untersammler 51 in den Entleerungsbehälter 53. Damit das Wärmeträgermedium auch bei Energieausfall in den Entleerungsbehälter 53 strömt, weisen die Unterverteiler 49, Untersammler 51, Rohrleitungsschleifen 47 jeweils ein Gefälle auf, wobei das Gefälle so ausgerichtet ist, dass der Entleerungsbehälter 53 am tiefsten Punkt liegt. Durch das Öffnen des Belüftungsventils 55 erfolgt ein Druckausgleich, so dass das Wärmeträgermedium in den Entleerungsbehälter 53 einströmen kann.

Um die Entleerung zu unterstützen, ist es weiterhin möglich, am Entleerungsbehälter 53 einen Unterdruck anzulegen, so dass das Wärmeträgermedium in den Entleerungsbehälter 53 eingesaugt wird. Dies ist jedoch nicht möglich, wenn der Entleerungsbehälter 53 gleichzeitig auch als Mischvorrichtung 27 dient. In diesem Fall besteht jedoch die Möglichkeit, am Belüftungsventil 55 einen Überdruck anzulegen, um das Wärmeträgermedium aus Unterverteiler 49, Rohrleitungsschleifen 47 und Untersammler 51 in den Entleerungsbehälter 53 zu drücken. Insbesondere dann, wenn das Wärmeträgermedium zum Beispiel mit dem Sauerstoff aus der Luft chemisch reagieren kann, ist es bevorzugt, die zur Belüftung ein Inertgas, beispielsweise Stickstoff, einzusetzen. In diesem Fall wird das Belüftungsventil 55 mit einem Gasvorrat, in dem das entsprechende Gas bevorratet ist, verbunden.

Um nach einer Entleerung das Solarfeldsegment 21 wieder mit dem Wärmeträgermedium zu befüllen, wird das Wärmeträgermedium mit Hilfe der Tauchpumpe 43 aus dem Entleerungsbehälter 53 in den Unterverteiler 49 eingeleitet. Aus diesem strömt das Wärmeträgermedium dann wieder in die Rohrleitungsschleifen 47 und den Untersammler 51 und von dort in den Sammler 25.

### Bezugszeichenliste

- 1: linear konzentrierendes Solarkraftwerk
- 3: Solarfeld
- 5: Sonnenstrahlung
- 7: heißer Tank
- 9: Wärmespeichersystem
- 11: Wärmeübertrager
- 13: Turbine
- 15: elektrische Energie
- 17: Wärmeabgabe
- 19: kalter Tank
- 21: Solarfeldsegment
- 23: Verteiler
- 25: Sammler
- 27: Mischvorrichtung
- 29: Bypass
- 31: Pumpe
- 33: heißes Wärmeträgermedium führende Rohrleitung
- 35: kaltes Wärmeträgermedium führende Rohrleitung
- 37: Behälter
- 39: Rohrleitung
- 41: Absperreinrichtung
- 43: Tauchpumpe
- 45: Rohrleitung
- 47: Rohrleitungsschleife
- 49: Unterverteiler
- 51: Untersammler
- 53: Entleerungsbehälter
- 55: Belüftungsventil

## Patentansprüche

1. Verfahren zum Betrieb eines linear konzentrierenden Solarkraftwerks (1), bei dem eine Salzschmelze als Wärmeträgermedium durch mindestens eine Rohrleitungsschleife (47) mit mindestens einem Receiver strömt, wobei das Wärmeträgermedium eine Strömungsgeschwindigkeit aufweist, die so groß ist, dass keine unzulässigen Temperaturdifferenzen innerhalb der Rohrleitungsschleife (47) auftreten, wobei mindestens ein Teil des Wärmeträgermediums bei Austritt aus der Rohrleitungsschleife (47) entnommen wird und zurück in die Rohrleitungsschleife (47) geführt wird, wobei der in die Rohrleitungsschleife (47) zurückgeführte Teil des Wärmeträgermediums vor Einleitung in die Rohrleitungsschleife (47) mit dem der Rohrleitungsschleife (47) zuzuführenden Wärmeträgermedium gemischt wird, wobei zum Mischen des in die Rohrleitungsschleife (47) zurückgeführten Teils des Wärmeträgermediums und des der Rohrleitungsschleife (47) zuzuführenden Wärmeträgermediums ein Behälter verwendet wird, in den der zurückgeführte Teil des Wärmeträgermediums und das zuzuführende Wärmeträgermedium eingeleitet werden und aus dem eine Mischung aus zurückgeführtem Wärmeträgermedium und zuzuführendem Wärmeträgermedium in die Rohrleitungsschleife (47) eingespeist wird, wobei der Behälter ein Entleerungsbehälter (53) ist, der mit einer in die Rohrleitungsschleife (47) führenden Rohrleitung verbunden ist.

2. Verfahren gemäß Anspruch 1, **dadurch gekennzeichnet, dass** der Entleerungsbehälter (53) im Betrieb des linear konzentrierenden Solarkraftwerks teilbefüllt ist und das nicht befüllte Volumen so bemessen ist, dass das in der Rohrleitungsschleife (47) enthaltene Wärmeträgermedium in den Entleerungsbehälter (53) ablaufen kann.

3. Verfahren gemäß Anspruch 1, **dadurch gekennzeichnet, dass** ein zentraler Mischbehälter (37) eingesetzt wird, in den das zurückgeführte Wärmeträgermedium und das mehreren Rohrleitungsschleifen (47) zuzuführende Wärmeträgermedium eingeleitet und durchmischt werden und aus dem die Rohrleitungsschleifen (47) gespeist werden.

4. Verfahren gemäß einem der Ansprüche 1 bis 3, **dadurch gekennzeichnet, dass** bei Umschaltung von Nachtbetrieb auf Tagbetrieb das gesamte am Austritt der Rohrleitungsschleife (47) entnommene Wärmeträgermedium solange zurück in die Rohrleitungsschleife (47) geleitet wird, bis das Wärmeträgermedium auf eine Mindestbetriebstemperatur erwärmt worden ist.

5. Verfahren gemäß einem der Ansprüche 1 bis 4, **dadurch gekennzeichnet, dass** im Nachtbetrieb der zurückgeführte Teil des Wärmeträgermediums so bemessen ist, dass die der Rohrleitungsschleife (47) zugeführte Mischung aus zurückgeführtem Wärmeträgermedium und zuzuführendem Wärmeträgermedium eine Temperatur aufweist, die maximal 20% des Temperaturwertes in °C oberhalb der Erstarrungstemperatur liegt.

6. Linear konzentrierendes Solarkraftwerk geeignet zum Durchführen eines Verfahrens gemäß einem der vorhergehenden Ansprüche.

7. Linear konzentrierendes Solarkraftwerk gemäß Anspruch 6, **dadurch gekennzeichnet, dass** das Solarkraftwerk (1) eine Vielzahl an Rohrleitungsschleifen (47) umfasst und eine zentrale Mischvorrichtung (27) vorgesehen ist, in die das zurückzuführende Wärmeträgermedium aus den einzelnen Rohrleitungsschleifen (47) und das in die Rohrleitungsschleifen (47) zuzuführende Wärmeträgermedium eingeleitet werden und aus der die Mischung aus zurückgeführtem Wärmeträgermedium und zuzuführendem Wärmeträgermedium in die Rohrleitungsschleifen (47) eingespeist wird.

8. Linear konzentrierendes Solarkraftwerk gemäß Anspruch 7, **dadurch gekennzeichnet, dass** die zentrale Mischvorrichtung (27) ein mit einer Trennwand abgeteilter Teil eines Behälters (37) ist.

9. Linear konzentrierendes Solarkraftwerk gemäß Anspruch 8, **dadurch gekennzeichnet, dass** das Wärmeträgermedium aus dem Behälter (37) oder dem abgetrennten Teil des Behälters mit einem Tauchrohr entnommen wird.

## Claims

1. A method for operating a linearly concentrating solar power plant (1), in which a salt melt as heat transfer medium flows through at least one pipeline loop (47) having at least one receiver, the heat transfer medium having a flow velocity which is such that no inadmissible temperature differences occur within the pipeline loop (47), where at least part of the heat transfer medium, upon exit from the pipeline loop (47), is extracted and is recirculated into the pipeline loop (47), where that part of the heat transfer medium which is recirculated into the pipeline loop (47) is mixed, before introduction into the pipeline loop (47), with the heat transfer medium to be delivered to the pipeline loop (47), where, to mix that part of the heat transfer medium which is recirculated into the pipeline loop (47) and the heat transfer medium to be delivered to the pipeline loop (47), a tank is used, into which the recirculated part of the heat transfer medium and the heat transfer medium to be delivered are introduced and out of which a mixture of recirculated heat transfer medium and of heat transfer medium to be delivered is fed into the pipeline loop (47), where the tank is an emptying tank (53) which is connected to a pipeline leading into the pipeline loop (47) .

2. The method according to claim 1, wherein, during the operation of the linearly concentrating solar power plant, the emptying tank (53) is partly filled and the non-filled volume is dimensioned such that the heat transfer medium contained in the pipeline loop (47) can flow out into the emptying tank (53).

3. The method according to claim 1, wherein a central mixing tank (37) is used, into which the recirculated heat transfer medium and the heat transfer medium to be delivered to a plurality of pipeline loops (47) are introduced and fully mixed and out of which the pipeline loops (47) are fed.

4. The method according to one of claims 1 to 3, wherein, during the changeover from night time operation to day time operation, the entire heat transfer medium extracted at the outlet of the pipeline loop (47) is conducted back into the pipeline loop (47) until the heat transfer medium has been heated to a minimum operating temperature.

5. The method according to one of claims 1 to 4, wherein, in night time operation, the recirculated part of the heat transfer medium is dimensioned such that the mixture, delivered to the pipeline loop (47), of recirculated heat transfer medium and of heat transfer medium to be delivered has a temperature which lies at most 20% of the temperature value in °C above the solidification temperature.

6. A linearly concentrating solar power plant suitable for carrying out a method according to one of the preceding claims.

7. The linearly concentrating solar power plant according to claim 6, wherein the solar power plant (1) comprises a multiplicity of pipeline loops (47), and a central mixing device (27) is provided, into which the heat transfer medium to be recirculated from the individual pipeline loops (47) and the heat transfer medium to be delivered into the pipeline loops (47) are introduced and out of which the mixture of recirculated heat transfer medium and of heat transfer medium to be delivered is fed into the pipeline loops (47).

8. The linearly concentrating solar power plant according to claim 7, wherein the central mixing device (27) is a part of a tank (37) which is divided off by means of a partition.

9. The linearly concentrating solar power plant according to claim 8, wherein the heat transfer medium is extracted out of the tank (37) or the separated-off part of the tank by means of an immersion pipe.

## Revendications

1. Procédé de fonctionnement d'une centrale solaire (1) à concentration linéaire, dans lequel un sel fondu s'écoule en tant que milieu caloporteur à travers au moins une boucle de canalisation (47) comportant au moins un récepteur, le milieu caloporteur ayant une vitesse d'écoulement si grande qu'aucune différence de température non autorisée n'apparait dans la boucle de canalisation (47), au moins une partie du milieu caloporteur étant retirée à la sortie de la boucle de canalisation (47) et ramenée dans la boucle de canalisation (47), la partie du milieu caloporteur qui est ramenée dans la boucle de canalisation (47) étant mélangée au milieu caloporteur à ramener à la boucle de canalisation (47) avant d'être introduite dans la boucle de canalisation (47), un récipient étant utilisé pour mélanger la partie du milieu caloporteur ramenée dans la boucle de canalisation (47) et le milieu caloporteur à ramener dans la boucle de canalisation (47), récipient dans lequel sont introduits la partie du milieu caloporteur qui est ramenée et le milieu caloporteur à ramener et duquel un mélange de milieu caloporteur ramené et du milieu caloporteur à ramener est introduit dans la boucle de canalisation (47), le récipient étant un conteneur de vidange (53) qui est relié à une canalisation menant à la boucle de canalisation (47).

2. Procédé selon la revendication 1, **caractérisé en ce que** le récipient de vidange (53) est partiellement rempli pendant le fonctionnement de la centrale solaire à concentration linéaire et **en ce que** le volume non rempli est dimensionné de telle sorte que le milieu caloporteur contenu dans la boucle de canalisation (47) peut être vidé dans le récipient de vidange (53).

3. Procédé selon la revendication 1, **caractérisé en ce qu'**un récipient de mélange central (37) est utilisé dans lequel sont introduits et mélangés le milieu caloporteur ramené et le milieu caloporteur à ramener à la pluralité de boucles de canalisation (47) et à partir duquel les boucles de canalisation (47) sont alimentées.

4. Procédé selon l'une des revendications 1 à 3, **caractérisé en ce que**, lors du passage du mode nuit au mode jour, la totalité du milieu caloporteur retiré à la sortie de la boucle de canalisation (47) est ramenée dans la boucle de la canalisation (47) jusqu'à ce que le milieu caloporteur ait été chauffé à une température de fonctionnement minimale.

5. Procédé selon l'une des revendications 1 à 4, **caractérisé en ce que**, en mode nuit, la partie du milieu caloporteur qui a été ramenée est dimensionnée de telle sorte que le mélange, ramené à la boucle de canalisation (47), de milieu caloporteur ramené et du milieu caloporteur à ramener ait une température qui ne dépasse pas la température de solidification de plus 20 % de la valeur de température en °C.

6. Centrale solaire à concentration linéaire appropriée pour mettre en oeuvre un procédé selon l'une des revendications précédentes.

7. Centrale solaire à concentration linéaire selon la revendication 6, **caractérisée en ce que** la centrale solaire (1) comprend une pluralité de boucles de canalisation (47) et **en ce qu'**un dispositif de mélange central (27) est prévu dans lequel sont introduits le milieu caloporteur à ramener provenant des boucles de canalisation individuelles (47) et le milieu caloporteur à ramener dans les boucles de canalisation (47) et duquel le mélange de milieu caloporteur ramené et de milieu caloporteur à ramener est introduit dans les boucles de canalisation (47).

8. Centrale solaire à concentration linéaire selon la revendication 7, **caractérisée en ce que** le dispositif de mélange central (27) est une partie d'un récipient (37) qui est divisée par une paroi de séparation.

9. Centrale solaire à concentration linéaire selon la revendication 8, **caractérisée en ce que** le milieu caloporteur provenant du récipient (37) ou de la partie séparée du récipient est retiré à l'aide d'un tube plongeur.
